# EUROPÄISCHE PATENTANMELDUNG

(11) **EP 1 146 696 A2**
(43) Veröffentlichungstag der Anmeldung: **17.10.2001**
(21) Anmeldenummer: 01104383.3
(22) Anmeldetag: 23.02.2001
(51) Int. Cl.: H04L 12/56

(54) **Telekommunikationsanlage**

(30) Priorität: 15.04.2000 DE 10018794
(71) Anmelder: Tenovis GmbH & Co. KG, 60362 Frankfurt am Main (DE)
(72) Erfinder: Reiss, Armin, D-61267 Neu Anspach (DE); Neumann, Joachim, D-61169 Friedberg (DE); Dappa, Henry, D-64319 Pfungstadt (DE); Wagner, Joachim, D-35625 Hüttenberg (DE); Schmidt, Werner, D-63762 Groszostheim (DE); Schickling, Berthold, D-65439 Flörsheim (DE); Breitbach-Hitzel, Gabriele, D-63322 Rödemark (DE)
(74) Vertreter: Bohnenberger, Johannes, Dr.

(57) **Zusammenfassung**

Es wird eine Telekommunikationsanlage vorgeschlagen, die dazu dient, einen Anschluß an paketvermittelnde digitale Kommunikationsnetze zu verwirklichen. Dazu wird der erfindungsgemäßen Telekommunikationsanlage eine Schnittstelleneinheit (2) hinzugefügt, die direkt an Bussysteme (1) der Telekommunikationsanlage angeschlossen ist. Die Schnittstelleneinheit (2) weist einen Rechner auf, auf dem ein Signalisierungsprotokoll, vorzugsweise das QSIG-Protokoll, ausgeführt wird, um Daten zwischen der Telekommunikationsanlage und dem paketvermittelnden digitalen Kommunikationsnetz (4) auszutauschen. Das Signalisierungsprotokoll ist zum Anschluß externer Geräte verwendbar. Die Schnittstelleinheit (2) befindet sich in dem Gehäuse der Telekommunikationsanlage. Als paketvermittelnde, digitale Kommunikationsnetze werden ATM-Netze oder das Internet an die Telekommunikationsanlage mittels der Schnittstelleneinheit angeschlossen.

## Beschreibung

### Stand der Technik

Die Erfindung geht aus von einer Telekommunikationsanlage nach der Gattung des unabhängigen Patentanspruchs.

Es ist bereits bekannt, Telekommunikationsanlagen an Zusatzgeräte anzuschließen, um die Telekommunikationsanlagen an neue Kommunikationsnetze wie ATM (Asynchronous Transfer Mode)-Netze und das Internet mittels IP (Internet Protocol)-Schnittstellen anzuschließen. Die Zusatzgeräte werden als Gateway bezeichnet und wirken als Übersetzer der Daten von und zu der Telekommunikationsanlage beziehungsweise von und zu dem angeschlossenen Kommunikationsnetz. Der Anschluß der Zusatzgeräte erfolgt an vorhandenen Schnittstellen der Telekommunikationsanlage. Solche Schnittstellen sind ISDN (Integrated Service Data Network)-Schnittstellen, zum einen Schmalband-ISDN mit einer Übertragungsrate von 64 kbit pro Sekunde und zum anderen Breitband-ISDN-Schnittstellen mit einer Übertragungsrate von 2 Mbit pro Sekunde. Die Zusatzgeräte werden getrennt von der Telekommunikationsanlage gewartet und mit Energie versorgt.

Hingegen weisen neue Telekommunikationsanlagen entsprechende Schnittstellen für die neuen Kommunikationsnetze auf. Dabei wird der Aufbau der Telekommunikationsanlage an diese neuen Anforderungen hin angepaßt.

### Vorteile der Erfindung

Die erfindungsgemäße Telekommunikationsanlage mit den Merkmalen des unabhängigen Patentanspruchs hat demgegenüber den Vorteil, dass die Telekommunikationsanlage eine Schnittstelleneinheit aufweist, die direkt an die Bussysteme der erfindungsgemäßen Telekommunikationsanlage angeschlossen ist und die Verbindung zu den neuen Kommunikationsnetzen herstellt. Damit werden keine Standardschnittstellen, Schmalband- oder Breitband-ISDN-Schnittstellen, der Telekommunikationsanlage verbraucht und die Bandbreite der Übertragung ist auch nicht durch solche Schnittstellen beeinträchtigt, sondern hängt allein von den Bussystemen der Telekommunikationsanlage und der neuen Schnittstelleneinheit selbst ab.

Die Schnittstelleneinheit wird vorteilhafterweise als Steckkarte in die Telekommunikationsanlage selbst eingebaut, so dass redundante Systeme, die in getrennten Systemen gleich sind, wie eine Stromversorgung entfallen. Dies reduziert den Aufwand erheblich, wobei gleichzeitig die herkömmliche Telekommunikationsanlagenstruktur übernommen wird. Ein völliges Neudesign der Telekommunikationsanlage entfällt also hier.

Dies hängt vorteilhafterweise damit zusammen, dass die Schnittstelleneinheit ein Signalisierungsprotokoll verwendet, das das gleiche ist, wie ein externes Zusatzgerät es verwenden würde. Damit erscheint der Telekommunikationsanlage die Schnittstelleneinheit wie ein externes Zusatzgerät. Durch diese Maßnahme entfällt das neue Design der Telekommunikationsanlage, so dass eine erhebliche Aufwandsersparnis eintritt. Insbesondere können damit auch bereits bestehende Telekommunikationsanlagen zum Anschluß an neue Kommunikationsnetze aufgerüstet werden, was eine erhebliche Vereinfachung und Ersparnis für Betreiber von Telekommunikationsanlagen mit sich bringt.

Durch die in den abhängigen Ansprüchen aufgeführten Maßnahmen und Weiterbildungen sind vorteilhafte Verbesserungen der in dem unabhängigen Patentanspruch angegebenen Telekommunikationsanlage möglich.

Besonders von Vorteil ist, dass die Schnittstelleneinheit die Telekommunikationsanlage an die neuen, wichtigen Kommunikationsnetze wie ATM-Netze und das Internet anschließt. Damit wird die herkömmliche Telekommunikationsanlage für alle wichtigen Kommunikationsnetze verwendbar. Dies führt zu einer erheblichen Aufwandsersparnis, da keine Neuanschaffungen des ganzen Geräts oder eines Zusatzgerätes notwendig sind. Damit ergibt sich ein breites Anwendungsgebiet für die erfindungsgemäße Telekommunikationsanlage.

Darüber hinaus ist es von Vorteil, dass die Schnittstelleneinheit als das Signalisierungsprotokoll QSIG (Q-Signalisierung) verwendet wird. Damit ist es möglich, dass die Telekommunikationsanlage mittels dieses zum Teil standardisierten und für verschiedene Hersteller offenen Protokolls, die Kommunikation der Telekommunikationsanlage mit anderen Telekommunikationsanlagen anderer Hersteller, die auch mit diesem QSIG-Protokoll kommunizieren, möglich ist. Dies erschließt einen wesentlich breiteren Anwendungsbereich der erfindungsgemäßen Telekommunikationsanlage.

Weiterhin ist es von Vorteil, dass die Telekommunikationsanlage mit der Schnittstelleneinheit in einem Gehäuse aufgebaut ist. Damit ist es vorteilhafterweise möglich ein einheitliches Betriebs- und Wartungskonzept für die Telekommunikationsanlage durchzuführen. Dazu gehören auch Wartungsaufgaben, die dann an der Telekommunikationsanlage auch für die Schnittstelleneinheit durchgeführt werden. Dies führt zu einer erheblichen Aufwandsersparnis.

### Zeichnung

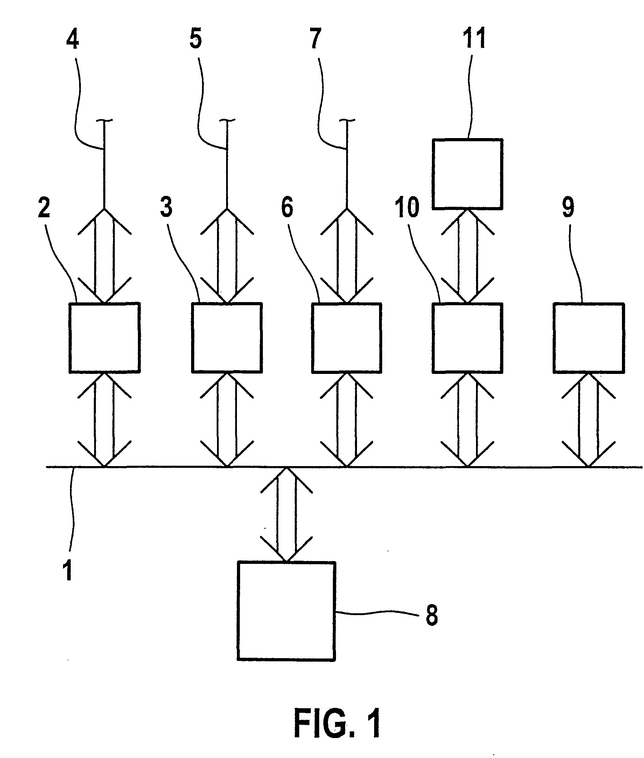

Ausführungsbeispiele der Erfindung sind in der Zeichnung dargestellt und werden in der Beschreibung näher erläutert. Es zeigt Figur 1 die erfindungsgemäße Telekommunikationsanlage als Blockschaltbild.

### Beschreibung

Durch das Auftauchen von immer neuen Kommunikationsnetzen wie ATM-Netzen und dem Internet unterliegen bestehende Telekommunikationsanlagen der Notwendigkeit, entweder ergänzt oder durch eine neue Anlage ersetzt zu werden. Dies ist insbesondere deshalb dringend, da die neuen Kommunikationsnetze Vorteile bieten, die mit herkömmlichen Kommunikationsnetzen nicht zu realisieren sind.

Erfindungsgemäß wird daher eine Telekommunikationsanlage mit einer Schnittstelleneinheit ausgerüstet, die ein Rechner aufweist und die direkt an die Bussysteme der Telekommunikationsanlage selbst angeschlossen ist. Die Schnittstelleneinheit schließt die Telekommunikationsanlage an paketvermittelnde Netze wie ein ATM-Netz und das Internet an. Durch die Verwendung eines Signalisierungsprotokolls, vorzugsweise QSIG, sieht es für die Telekommunikationsanlage so aus, als ob ein externes Gerät an die Telekommunikationsanlage angeschlossen ist. Diese Maßnahme ermöglicht, dass die Telekommunikationsanlage selbst in ihrem Aufbau nicht verändert werden muß. Voraussetzung für den Einbau der Schnittstelleneinheit ist entweder ein Steckkartenplatz in der Telekommunikationsanlage, oder die Schnittstelleneinheit wird abgesetzt, aber verbunden mit der Telekommunikationsanlage, verwendet. Die Schnittstelleneinheit selbst weist einen Rechner zur Durchführung ihrer Aufgaben auf.

In Figur 1 ist die erfindungsgemäße Telekommunikationsanlage dargestellt. An die Bussysteme 1 sind verschiedene Geräte angeschlossen, die jeweils einen Buscontroller aufweisen, der die Kommunikation über die Bussysteme 1 regelt. Die Bussysteme 1 weisen ein Signalisierungsbus und einen Nutzdatenbus auf. Der Signalisierungsbus wird zur Übertragung von Signalisierungsdaten verwendet, während die eigentlichen Nutzdaten über den Nutzdatenbus übertragen werden. Die Bussysteme 1 sind hier ein elektrisches Leitungssystem, alternativ können jedoch auch ein optisches Leitungssystem oder gar ein Funkbus verwendet werden. In diesem Fall weisen die Buscontroller entweder elektrooptische Wandler oder Sende-/Empfangsstationen auf, um die Kommunikation über einen optischen beziehungsweise funkbasierten Bus durchzuführen.

An die Bussysteme 1 sind eine Schnittstelleneinheit 2, eine 64-kbit-pro-Sekunde-Schmalband-ISDN-Schnittstelle 3, eine Breitband-ISDN-Schnittstelle 6, eine Schnittstelle für Endgeräte 10, eine Steuerung 9 und ein Koppelfeld 8 über Datenein/ausgänge verbunden. Über einen Datenein-/ausgang ist die Schnittstelleneinheit 2 mit einem paketvermittelnden digitalen Kommunikationsnetz 4 verbunden. Über einen zweiten Datenein-/ausgang der 64-kbit-pro-Sekunde-Schmalband-ISDN-Schnittstelle 3, ist eine Leitung 5 angeschlossen. An einen zweiten Datenein/ausgang der Breitband ISDN-Schnittstelle 6 ist eine Leitung 7 angeschlossen. Die Schnittstelle für Endgeräte 10 ist über seinen zweiten Datenein-/ausgang an ein Endgerät 11 angeschlossen.

ISDN ist eine Übertragungstechnik, die die Übertragung beliebiger Daten in digitaler Form erlaubt. Die Daten werden dabei in Rahmen übertragen. Es gibt Schmalband-ISDN und Breitband-ISDN, die zum einen eine Übertragungsrate von 64 kBbit pro Sekunde und zum anderen 2 Mbit pro Sekunde aufweisen.

Die Schnittstelleneinheit 2 weist einen Rechner auf, auf dem ein Signalisierungsprotokoll abläuft, das für die Übermittlung der Daten von der Telekommunikationsanlage über die Bussysteme 1 in das Kommunikationsnetz 4 verwendet wird. Weiterhin wird dieses Signalisierungsprotokoll auch für die entgegengesetzte Übertragung von dem Kommunikationsnetz 4 zu der Telekommunikationsanlage verwendet. Als das Signalisierungsprotokoll wird hier QSIG verwendet. Damit wird ein Signalisierungsprotokoll verwendet, das auch für den Anschluß von externen Geräten verwendet wird. Dabei erscheint es der Telekommunikationsanlage so, als ob die Schnittstelleneinheit 2 ein externes Gerät sei, weshalb der Aufbau der Telekommunikationsanlage nicht verändert werden muß. Der Rechner weist dafür einen Prozessor, Speicher und Schnittstellen auf, die zur Durchführung von QSIG notwendig sind.

QSIG ist ein europäischer Standard, bei dem Grundfunktionen eines Signalisierungsprotokolls zwischen Telekommunikationsanlagen festgelegt sind. Dies ermöglicht, dass Telekommunikationsanlagen von verschiedenen Herstellern Daten austauschen können, sofern sie sich an das QSIG-Protokoll halten. Herstellern steht es frei, weitere Funktionen hinzufügen.

Die Steuerung 9 leitet die Daten von der Schnittstelleneinheit 2 zu dem Koppelfeld 8, um entsprechend weiter vermittelt zu werden. Die Schnittstelleneinheit 2 ist hier als Steckkarte für die Telekommunikationsanlage ausgebildet, die einfach in einen freien Steckplatz der Telekommunikationsanlage eingebaut wird. Alternativ kann die Schnittstelleneinheit 2 auch abgesetzt von der Telekommunikationsanlage betrieben werden, wobei dann die Verbindungen zu den Bussystemen 1 aus der Telekommunikationsanlage zu der Schnittstelleneinheit 2 herausgeführt werden. Dazu zählen neben Datenleitungen auch Energieversorgungsleitungen.

Die 64-kbit-pro-Sekunde-Schmalband-ISDN-Schnittstelle 3 und die Breitband-ISDN-Schnittstelle 6 weisen jeweils Prozessoren auf, die die Daten, die von dem Bussystemen 1 kommen, entweder für Schmalband-ISDN- oder Breitband-ISDN-Übertragungen vorbereiten. Im umgekehrten Datenfluß führen diese Schnittstellen eine entsprechende Umsetzung der Daten für die Übertragung über die Bussysteme 1 aus.

Das Koppelfeld 8 schaltet per Einstellbefehl von der Steuerung 9 individuelle Verbindungen zwischen zwei Anschlüssen. Dazu weist das Koppelfeld 8 von der Steuerung 9 steuerbare Schalter auf. Die Steuerung 9 steuert die Schnittstellen der Telekommunikationsanlage und stellt die Verbindungswege im Koppelfeld 8 ein. Die Schnittstelle für Endgeräte 10, sorgt für eine entsprechende Umsetzung der Daten von den Bussystemen 1 zu dem Endgerät 11 und umgekehrt. Bei dem Endgerät 11 handelt es sich hier um ein Telefon. Aber auch ein Rechner oder ein Mobiltelefon sind hier verwendbar.

Bei ATM handelt es sich um eine Vermittlungstechnik, wobei eine Paketvermittlung mit hohen Bit-Raten realisiert wird. Alle Nachrichtenarten (Sprache, Bild, Daten, Text) werden in gleicher Weise blockweise übertragen. Die Dateneinheiten weisen eine feste Länge von 53 Byte auf. 5 Byte davon sind für Steuerungsinformationen vorgesehen (englisch Header). Die restlichen 48 Byte dienen der Aufnahme der Nutzdaten. Die ATM-Zellen werden in unregelmäßigen Abständen übertragen. Es wird jedoch eine virtuelle Verbindung aufgebaut, die für die Kennzeichnung der ATM-Zellen verwendet wird. Bei dem Internet-Protokoll handelt es sich um ein verbindungsloses Datagramm-Protokoll. Es wird hierbei also keine virtuelle Verbindung aufgebaut. Die Datenpakete weisen eine Zieladresse auf, die von Netzknoten ausgewertet werden um die Pakete entsprechend zu versenden. Bei dem ISDN (Integrated Services Data Network) handelt es sich um ein Netz, bei dem entweder mit 64 kbit pro Sekunde oder im Falle des Breitband-ISDN mit 2 Mbit pro Sekunde Daten in der gleichen Weise unabhängig von ihrer Art übertragen werden.

Die Schnittstelleneinheit 2 befindet sich hier in dem Gehäuse der Telekommunikationsanlage, so dass die Schnittstellenanlage in das Wartungs- und Betriebskonzept der Telekommunikationsanlage einbezogen wird. Alternativ ist es möglich, die Schnittstelleneinheit 2 abgesetzt von dem Gehäuse der Telekommunikationsanlage zu betreiben. Dabei werden die Daten- und die Energieversorgungsleitungen von der Telekommunikationsanlage zu der abgesetzten Schnittstelleneinheit 2 herausgeführt.

## Patentansprüche

1. Telekommunikationsanlage, wobei die Telekommunikationsanlage als Bussysteme (1) einen Signalisierungsbus und einen Nutzdatenbus aufweist, wobei an den Bussystemen (1) Schnittstelleneinheiten (2, 3, 6, 10), wenigstens eine Steuerung (9) und ein Koppelfeld (8) angeschlossen sind, **dadurch gekennzeichnet, dass** wenigstens eine Schnittstelleneinheit (2) als Rechner ausgebildet ist, der die Telekommunikationsanlage an ein paketvermittelndes, digitales Kommunikationsnetz (4) anschließt und dass der Rechner so ausgebildet ist, dass der Rechner ein Signalisierungsprotokoll, das zum Anschluß externer Geräte verwendbar ist, ausführt, um Daten zwischen der Telekommunikationsanlage und dem paketvermittelnden, digitalen Kommunikationsnetz (4) auszutauschen.

2. Telekommunikationsanlagen nach Anspruch 1, **dadurch gekennzeichnet, dass** der Rechner die Telekommunikationsanlage an ein ATM-Netz oder das Internet als paketvermittelnde digitale Kommunikationsnetze anschließt.

3. Telekommunikationsanlagen nach Ansprüche 1 oder 2, **dadurch gekennzeichnet, dass** der Rechner so ausgebildet ist, dass der Rechner das QSIG-Protokoll als das Signalisierungsprotokoll verwendet.

4. Telekommunikationsanlage nach Anspruch 3, **dadurch gekennzeichnet, dass** der Rechner sich in einem Gehäuse der Telekommunikationsanlage befindet.

5. Telekommunikationsanlagen nach Anspruch 4, **dadurch gekennzeichnet, dass** der Rechner in das Wartungs- und Betriebskonzepts der Telekommunikationsanlage einbezogen ist.
